# EUROPÄISCHE PATENTSCHRIFT

(11) **EP 0 887 035 B1**
(45) Veröffentlichungstag und Bekanntmachung des Hinweises auf die Patenterteilung: **21.06.2000**
(21) Anmeldenummer: 98102998.6
(22) Anmeldetag: 20.02.1998
(51) Int. Cl.: A47J 25/00

(54) **Frucht-Schneidgerät**
Cutting apparatus for fruits
Appareil pour couper des fruits

(30) Priorität: 26.06.1997 DE 19727177
(43) Veröffentlichungstag der Anmeldung: 30.12.1998
(73) Patentinhaber: Prokent AG, 98693 Ilmenau (DE)
(72) Erfinder: Häbler, Hans Peter, 98704 Langewiesen (DE)
(74) Vertreter: Seewald, Jürgen, Dipl.-Ing.

(56) Entgegenhaltungen:
- EP-A- 0 084 204
- CH-A- 260 257
- US-A- 3 540 503
- US-A- 5 067 397

## Beschreibung

Die Erfindung bezieht sich auf Frucht-Schneidgerät, das zum individuellen Schneiden von Früchten eingesetzt werden kann.
Frucht-Schneidgeräte kommen in verschiedenen Typen häufig zum Einsatz.
Das Schneiden von Früchten ist auf einfachste Art mit Messern bekannt. Zum Trennen der Frucht von der Schale und von einem vorhandenen Kernbereich ist es mit einfachen Messern ist oft für die hantierende Person schwierig und beschwerlich.
Bisher bekannte spezielle Schneidgeräte zur Trennung von Schale- und Kernbereich sind bekannt, welche aber unhandliche Bedienabläufe besitzen.

Gegenstand der vorliegenden Erfindung ist ein Frucht-Schneidgerät zur Trennung von Schalenbereich und Fruchtbereich, bestehend aus einer Grundplatte mit einem koaxialen Messer unter einer durchsichtigen Abdeckung über dem Messerhalter angeordnet ist. Zum Zweck der Fruchtaufnahme, insbesondere für Ananasfrüchte, befindet sich darunter eine nach vorn offene Wanne. Die Frucht wird durch einen Stempel, der in das koaxiale Doppelmesser eingreift gegen dieses verschoben. Der Vorschub erfolgt manuell durch mehrmaliges Hin- und Herbewegen des im Lager angelenkten Bedienhebels schiebt sich eine Schubstange über ein Schubgetriebe mit dem Stempel dem Messer entgegen.

Ein bekanntes Gerät, gemäß dem Oberbegriff des Anspruchs 1 (vgl, EP-A-84204), ist senkrecht gestellt und drückt von oben auf die senkrecht stehende Frucht, vorzugsweise Ananasfrucht. Mit einem Hebel mit langem Hebelweg wird dieser Schneidvorgang von oben nach unten durch den Bediener vorgenommen, die dabei aufzuwendende Kraft ist in einem Zug zuzuführen, mittels Koaxialmesser wird die Frucht geschnitten , Schale und Fruchtfleisch fallen nach dem Scheidvorgang vom dann sich wieder oben befindenden Schneidmessers herunter. Der Fruchtkern muß aus dem Stempel manuell entfernt werden.
Darüberhinaus sind Schneidgeräte für Gemüse und/oder Obst in DE U1 8805763 beschrieben sowie ein Haushaltsschneidgeräte von der Grundform eines Apfelstechers in DE U1 8519521 ausgeführt.

Gegenstand der Erfindung ist ein Frucht-Schneidgerät das leicht zu bedienen ist und wenig Kraftaufwendungen benötigt, eine Kraftwegunterbrechung besitzt und in dem die geschnittene Frucht keine Fallwege benötigt, nach dem Scheidvorgang hygienisch auf einem Tablett abgelegt wird.

Erfindungsgemäß wird dies durch ein Frucht-Schneidgerät gemäß Anspruch 1 erreicht, wobei sich die Gesamtanordnung in der waagerechten Position oder in einer leicht geneigten Ebene befindet, die Krafteinleitung auf ein fest stehendes koaxiales Schneidmesser durch einen Stempel erfolgt, der mittels eines Krafteinleitungshebels über ein Schubgetriebe welches ein wegbegrenztes Sperrverhalten zeigt, in des Schneidmesser eingreißen kann.

Ein erfindungsgemäßes Frucht-Schneidgerät weist verschiedene Vorteile auf. Aufgrund des Schubgetriebes in Verbindung mit dem Krafteinleitungshebel ist eine Krafteinwirkung über Teilstücke des Bewegungsbereiches mit Erholphasen für den Bediener möglich, auf diese Art ist eine dosierte Kraftzugabe möglich, aufgrund der Lage in der geneigten Ebene ist ein Abfließen von entstehendem Fruchtsaft in ein Aufnahme möglich, die Frucht braucht keine großen Strecken fallen und damit ist ein Spritzen von entstehendem Fruchtsaft verringert. Durch die Gestaltung des Schneidmessers wird die Fruchtschale in zwei Hälften getrennt, dem Bediener aber in einer Einheit, Frucht mit getrennter Schale, aber in einer Entnahmeeinheit verpackungsbereit angeboten. Aufgrund der Anordnung des Schneidmessers am vorderen Ende des Frucht-Schneidgerätes durchläuft die Frucht das Scheidmesser nur einmal, damit entsteht eine geringere Entsaftung als bei mehrmaligem Durchfahren des Schneidmessers. Durch die Messeraufhängung, Verschraubung am Messerhalter, ist ein problemloses Wechseln des Schneidmessers möglich.
Die Gesamtausführung ist unter Verwendung nicht rostender Materialien als Gesamteinheit mit Wasser zu reinigen. Durch den sich aus der Gesamtanordnung ergebenen Aufbau ist eine Unfallgefahr durch unzweckmäßige Bedienung nahezu ausgeschlossen.
Das Frucht-Scheidgerät ist außer zum Schneiden von Ananasfrüchten auch zum Schneiden anderer Obstsorten, wie Äpfel, Birnen, oder Gemüse geeignet.

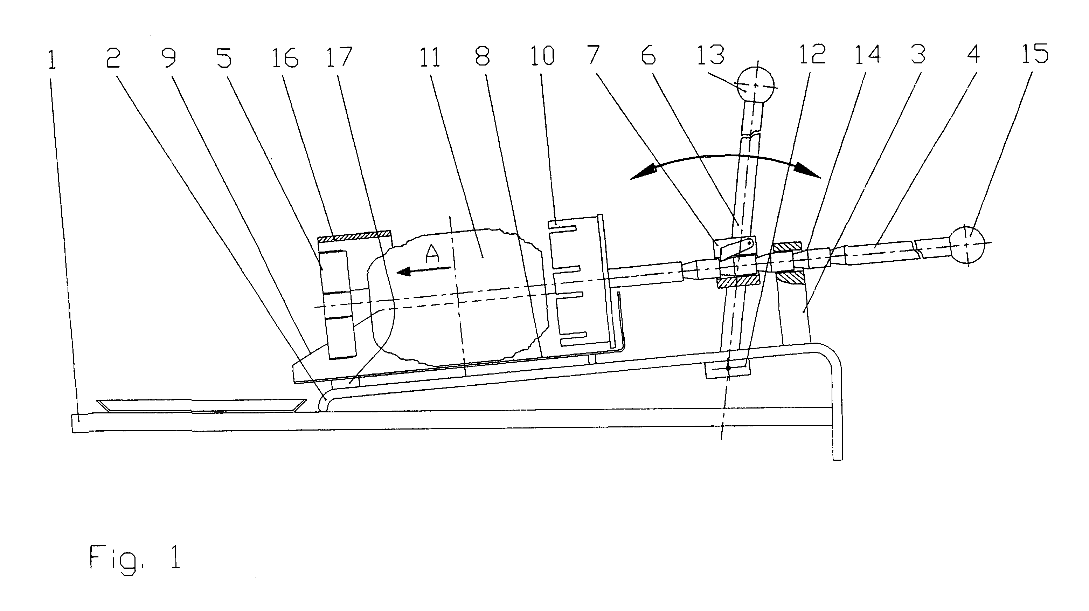

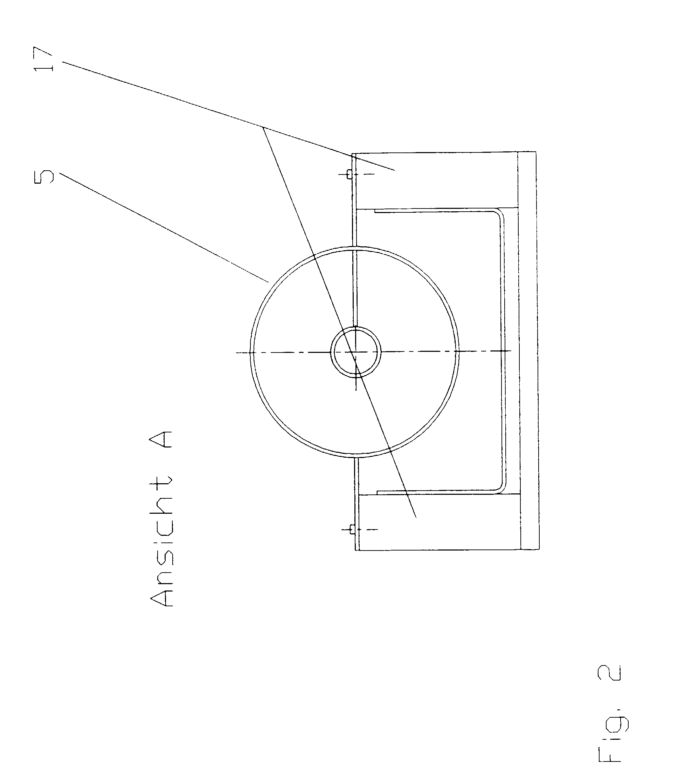

Im folgenden wird die Erfindung anhand eines Beispiels und mit Bezug auf die beiliegenden Zeichnungen näher erläutert, wobei Abbildung 1 die Seitenansicht des Fruchtscheiders zeigt und Abbildung 2 die Ansicht A eines erfindungsgemäßen Frucht-Schneidgerätes zeigt.

In Abbildung 1 ist der Aufbau der Frucht-Schneidegerätes dargestellt. Die Abbildung zeigt auf einer Grundplatte 2 ist ein koaxiales Messer 5 unter einer durchsichtigen Abdeckung 16 fest auf den Messerhaltern 17 angeordnet, zum Zwecke der Ablage der zu schneidenden Frucht 11 befindet sich darunter eine nach vorn offene Wanne 8 . Die Frucht 11 wird durch einen Stempel 10, der in das koaxiale Messer 5 eingreifen kann, gegen das Messer 5 geschoben. Der Vorschub erfolgt manuell durch mehrmaliges Hin- und Herbewegen des in der Führung 3 angelegten Krafteinleitungshebels 6 über das Schubgetriebe 7 , dabei schiebt sich die Schubstange 4 in der Führung 3 mit dem Stempel 10 dem Messer 5 entgegen.
Nach Beendigung des Scheidvorgangs wird der Krafteinleitungshebel 6 mit dem Schubgetriebe 7 bis an die Führung 3 zurück bewegt und eine Klinkensperre im Schubgetriebe 7 entsperrt, wobei dadurch die Schubstange 4 entgegengesetzt der Schneidrichtung vom Schneidmesser 5 wegbewegt und in eine erneute Schneidposition bewegt werden kann.
Abbildung 2 zeigt das koaxiale Schneidmesser 5 mit den Schneidmesserbefestigungen 17 und der Wanne 8.

## Patentansprüche

1. Frucht-Schneidgerät, bestehend aus einer Grundplatte (2), einer auf der Grundplatte (2) angeordneten Führung (3) für eine Schubstange (4), einem Schneidmesser (5) für eine Frucht (11) und einer Schneidmesser-Befestigung, wobei die Schubstange (4) durch einen Krafteinleitungshebel (6) und ein Übertragungsgetriebe (7) zum Aufbringen der Schneidkraft linear antreibbar ist, dadurch gekennzeichnet, daß die gerätetragende Grundplatte (2) in einer waagerechten oder geneigten Ebene angeordnet ist, und das Schneidmesser (5) feststehend über die Schneidmesser-Befestigung (17) mit der Grundplatte (2) verbunden ist, wobei der Krafteinleitungshebel (6) in einem Drehpunkt (12) drehgelenkig an die Grundplatte (2) angeschlagen ist, so daß er eine Kreissegment-Bewegung, bezogen auf die Grundplatten-Ebene, ausführen kann, und zwischen diesem Drehpunkt (12) und einem an entgegengesetzten Enden angeordneten Handstück (13) das Übertragungsgetriebe (7) trägt, welches in einen gekerbten Bereich (14) der chubstange (4) eingreift, wodurch eine Kraftübertragung in Schneidrichtung über Teilstrecken entsprechend der konstruktiv gewählten Kerbteilung der Schubstange möglich ist, die an ihrem der Frucht (11) zugewandten Ende einen Stempel (10) trägt, welcher in das Schneidmesser (5) eingreifen kann.

2. Frucht-Schneidgerät nach Anspruch 1, dadurch gekennzeichnet, daß an der Schubstange (4) an dem dem Stempel (10) entgegengesetzten Ende ein Griffstück (15) angeordnet ist, mit dessen Hilfe die Schubstange (4) nach dem Schneidvorgang entgegengesetzt der Schneidrichtung durch das Getriebe (7), welches eine Entsperreinrichtung an der hinteren Anschlagsposition des Krafteinleitungshebels (6) besitzt, bewegt werden kann.

3. Frucht-Schneidgerät nach Anspruch 1 oder Anspruch 2, dadurch gekennzeichnet, daß das Schneidmesser (5) in Form eines Koaxialmessers mit mehreren Klingen ausgeführt ist.

4. Frucht-Schneidgerät nach einem der vorher genannten Ansprüche, dadurch gekennzeichnet, daß die Fruchtaufnahme in einer Wanne (8) erfolgt, und am offenen Ende der Wanne (8) eine Abflußeinrichtung (9) angeordnet ist.

## Revendications

1. Appareil pour couper les fruits, se composant d'une plaque de base (2), d'un guide (3) prévu sur la plaqué de base (2) et une tige de poussée (4), d'un couteau (5) pour un fruit (11) et d'une fixation de couteau, la tige de poussée (4) pouvant être actionnée longitudinalement par un levier de transmission de force (6) et un mécanisme de poussée (7) pour appliquer la force de coupe, caractérisé en ce que la plaque de base (2), qui supporte l'appareil, est dans un plan horizontal ou incliné, et que le couteau (5) est relié à la plaque de base (2) d'une manière fixe sur le support du couteau (17), le levier de transmission de force (6) étant accroché en un point de rotation (12) et articulé sur la plaque de base (2), de façon qu'il puisse réaliser par rapport au plan de la plaque de base un mouvement, en arc de cercle, et porte, entre ce point de rotation (12) et une poignée (13) à l'extrémité opposée, le mécanisme de poussée (7) qui engrène la tige de poussée (4) dans la zone entaillée (14), si bien qu'une transmission de force, dans la direction de coupe, est possible par bonds partiels correspondant aux entailles horizontales choisies de structure de la tige de poussée, laquelle porte, à l'extrémité tournée vers le fruit, un piston qui peut pénétrer dans le couteau (5).

2. Appareil pour couper des fruits suivant la revendication 1, caractérisé en ce que, sur la tige de poussée (4), à l'extrémité opposée au piston, est prévue une manette (15) à l'aide de laquelle on peut déplacer la tige de poussée (4), après la manoeuvre de coupe dans le sens opposé à la coupe, par le mécanisme de poussée (7) qui comporte un dispositif de déblocage, sur la position d'action arrière du levier de transmission de force (6).

3. Appareil pour couper des fruits suivant la revendication 1 ou 2, caractérisé en ce que le couteau (5) est réalisé sous la forme d'un couteau coaxial à plusieurs lames.

4. Appareil pour couper des fruits suivant l'une des revendications précédentes, caractérisé en ce que la réception du fruit se fait dans un baquet (8) et qu'à l'extrémité ouverte du baquet (8), on prévoit un dispositif de décharge (9).

## Claims

1. Apparatus for cutting fruit, consisting of a baseplate (2), a guide (3), arranged on the baseplate (2), for a connecting rod (4), a cutting knife (5) for a fruit (11) and a cutting knife fixing, the connecting rod (4) being linearly drivable by means of a force application lever (6) and a transmission gear (7) to apply the cutting force, characterised in that the baseplate (2) supporting the apparatus is arranged in a horizontal or suitable plane and the cutting knife (5) is connected in a fixed position above the cutting knife fixing (17) to the baseplate (2), the force application lever (6) being mounted in a hinged manner on the baseplate (2) at a pivot (12), so that it can execute a movement along a segment of a circle, with reference to the plane of the baseplate, and carrying the transmission gear (7) between said pivot (12) and a handpiece (13) arranged at opposite ends, which transmission gear (7) engages in a notched region (14) of the connecting rod (4), as a result of which force transfer in the cutting direction is possible over sections corresponding to the structurally selected notch spacing of the connecting rod, which, on that end thereofwhich faces the fruit (11), carries a forcer (10) which can engage on the cutting knife (5).

2. Apparatus for cutting fruit according to Claim 1, characterised in that a handle (15) is arranged on the connecting rod (4) at the end opposite the forcer (10), with the aid of which handle (15) the connecting rod (4) can, after the cutting operation, be moved in the direction opposite to the cutting direction by means of the gear (7), which has a release device at the rear stop position of the force application lever (6).

3. Apparatus for cutting fruit according to Claim 1 or Claim 2, characterised in that the cutting knife (5) is constructed in the form of a coaxial knife with multiple blades.

4. Apparatus for cutting fruit according to one of the abovementioned claims, characterised in that the fruit is collected in a tray (8) and a discharge device (9) is arranged at the open end of the tray (8).
